# FASCICULE DE BREVET EUROPEEN

(11) **EP 4 320 341 B1**
(45) Date de publication et mention de la délivrance du brevet: **12.03.2025**
(21) Numéro de dépôt: 22718745.7
(22) Date de dépôt: 31.03.2022
(51) Int. Cl.: F02C 3/10, F02C 6/20, F02C 7/268, F02C 7/32

(54) **TURBOMACHINE À TURBINE LIBRE COMPRENANT DES ÉQUIPEMENTS ENTRAÎNÉS PAR LA TURBINE LIBRE**
TURBOMASCHINE MIT FREIER TURBINE UND MIT EINER DURCH DIE FREIE TURBINE ANGETRIEBENEN VORRICHTUNG
FREE-TURBINE TURBOMACHINE COMPRISING EQUIPMENT DRIVEN BY THE FREE TURBINE

(30) Priorité: 08.04.2021 FR 2103596
(43) Date de publication de la demande: 14.02.2024
(73) Titulaire: Safran Helicopter Engines, 64510 Bordes (FR)
(72) Inventeur: VIVE, Loïs, Pierre, Denis, 77550 MOISSY-CRAMAYEL (FR); DROUIN, Thomas, 77550 MOISSY-CRAMAYEL (FR); BEDRINE, Olivier, 77550 MOISSY-CRAMAYEL (FR)
(74) Mandataire: Cabinet Beau de Loménie
(86) Numéro de dépôt international: PCT/FR2022/050612
(87) Numéro de publication internationale: WO 2022/214757

(56) Documents cités:
- EP-A1- 3 964 700
- FR-A1- 2 921 423
- US-A- 3 514 945
- US-A1- 2018 252 161

## Description

### Domaine Technique

La présente invention se rapporte au domaine général des turbomachines aéronautiques à turbine libre, notamment pour des turbomoteurs ou des turbogénérateurs, et plus particulièrement à une architecture d'une telle turbomachine permettant l'entrainement d'équipements via la turbine libre sans compromettre le fonctionnement des équipements lors du démarrage de la turbomachine.

### Technique antérieure

Un turbomoteur à turbine libre pour hélicoptère comporte généralement un générateur de gaz et une turbine libre entraînée en rotation par le flux de gaz généré par le générateur de gaz, ainsi qu'une machine électrique réversible qui peut être couplée au générateur de gaz notamment pour mettre en rotation le générateur de gaz lors d'une phase de démarrage du turbomoteur.

Traditionnellement, le générateur de gaz comporte au moins un compresseur et une turbine couplés en rotation. Le principe de fonctionnement est le suivant : l'air frais entrant dans le turbomoteur est comprimé du fait de la rotation du compresseur avant d'être envoyé vers une chambre de combustion où il est mélangé à un carburant. Les gaz brûlés lors de la combustion sont ensuite évacués à grande vitesse.

Il se produit alors une première détente dans la turbine du générateur de gaz, durant laquelle cette dernière extrait l'énergie nécessaire à l'entraînement du compresseur et des équipements. La turbine du générateur de gaz n'absorbe pas toute l'énergie cinétique des gaz brûlés et l'excédent d'énergie cinétique correspond au flux de gaz généré par le générateur de gaz. Ce dernier fournit donc de l'énergie cinétique à la turbine libre de sorte qu'il se produit une seconde détente dans la turbine libre qui transforme cette énergie cinétique en énergie mécanique afin d'entraîner un organe récepteur, tel le rotor de l'hélicoptère.

Lors de la phase de démarrage du turbomoteur, ou de la turbomachine de manière générale, il est nécessaire d'entraîner en rotation le générateur de gaz, c'est-à-dire entraîner en rotation le compresseur couplé à la turbine ainsi que les différents équipements qui sont connectés. Comme mentionné en préambule, c'est précisément l'un des rôles de la machine électrique réversible qui est le plus souvent un moteur électrique apte à fonctionner de manière réversible en génératrice électrique.

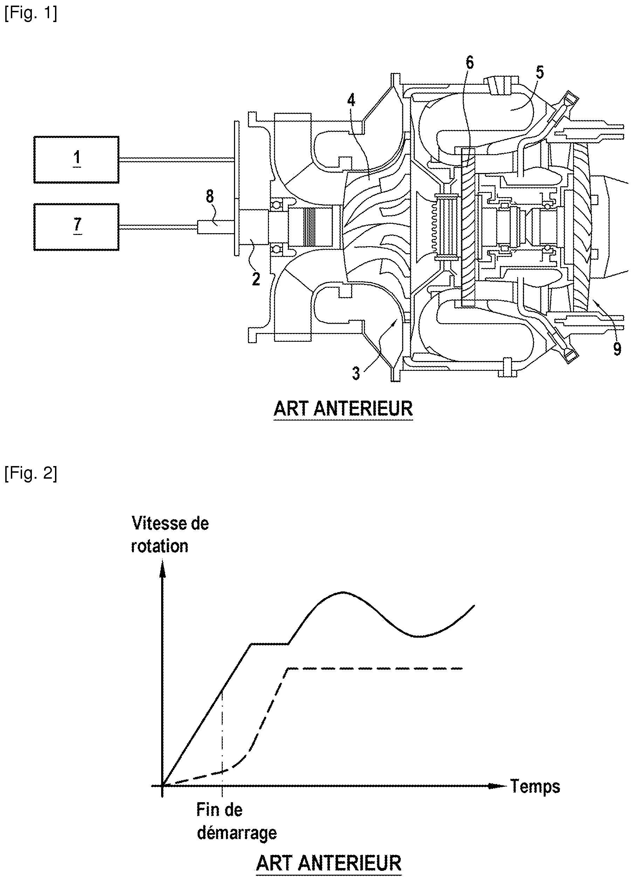

Comme cela est illustré sur la figure 1 qui présente schématiquement une turbomachine à turbine libre selon l'état de la technique, pour le démarrage, une machine électrique 1 dans un fonctionnement moteur entraîne l'arbre mécanique 2 du générateur de gaz 3, jusqu'à ce que la rotation de celui-ci soit entretenue par la combustion de carburant. L'entraînement en rotation de l'arbre du générateur de gaz par la machine électrique réversible fonctionnant en mode moteur pendant la phase de démarrage permet en outre d'entrainer des équipements, non représentés sur cette figure et qui peuvent être entrainés par l'arbre 2 via une boite d'accessoires. Ceci permet d'alimenter la turbomachine en carburant et en huile et de faire circuler de l'air dans le compresseur 4 et donc d'amener de l'air comprimé dans la chambre de combustion 5 afin d'initier la combustion. Cette combustion produit alors le flux gazeux permettant d'entraîner la turbine 6 de la turbine à gaz 3 en rotation, à la suite de quoi le compresseur 4 et les équipements sont entraînés en rotation par la turbine 6 sans l'aide de la machine électrique, ce qui signifie que le générateur de gaz 3 fonctionne de manière autonome, traduisant la fin de la phase de démarrage de la turbomachine.

En outre, pour une turbomachine comme celle illustrée sur la figure 1, un récepteur 7 en prise sur l'arbre 8 de la turbine libre 9, tel qu'une seconde machine électrique ou un rotor d'hélicoptère éventuellement associé à une boite de transmission principale, permet de répondre au besoin fourniture de puissance mécanique ou de génération forte puissance.

Sur une turbomachine comme illustré sur la figure 1, les équipements tels que la pompe à carburant, et la pompe à huile sont mécaniquement reliés à l'arbre 2 du générateur de gaz 3 via la boite d'accessoires.

Les équipements qui nécessitent un prélèvement d'énergie mécanique pour être entrainés en rotation, par exemple des pompes, sont également appelés accessoires et sont généralement montés sur une boite d'accessoires qui comprend au moins un train d'engrenages pour adapter les vitesses de rotation des accessoires.

Une fois la phase de démarrage terminée, il est connu d'utiliser la machine électrique réversible dans un mode de fonctionnement générateur pour produire de l'énergie électrique non propulsive (réseau 28V par exemple) pour fournir de l'électricité aux appareillages électriques. La machine électrique 1 génère de l'énergie électrique en prélevant de la puissance mécanique sur l'arbre 2 du générateur de gaz 3, l'énergie cinétique de rotation prélevée sur le générateur de gaz étant transformée en énergie électrique par ladite machine.

Cette machine électrique 1 peut être non réversible et constituée d'un simple démarreur, tel qu'un starter, si le besoin de génération électrique n'existe pas.

Sur la figure 2 est illustrée l'évolution, en fonction du temps et de la configuration possible du turbogénérateur, du régime de l'arbre 2 du générateur de gaz 3 en trait plein et du régime de l'arbre 8 de la turbine libre 9 en pointillés. On peut voir que l'évolution du régime des deux arbres est indépendante. Le point de sortie de la phase de démarrage est indiqué également.

Pour un turbomoteur, avec une turbine libre et un système de démarrage classique utilisant une machine électrique réversible, le prélèvement mécanique sur l'arbre du générateur de gaz servant à générer de la puissance électrique par la machine électrique réversible 1 dans un mode de fonctionnement générateur grève les performances du générateur de gaz.

En effet, la variation, au cours du vol, de la puissance mécanique prélevée par la machine électrique 1 et les équipements sur le générateur de gaz se traduit par un déplacement de la ligne de fonctionnement du moteur dans le champ compresseur. Ce déplacement correspond à une marge au pompage qu'il est nécessaire de provisionner, ce qui a pour conséquence :
- de pénaliser l'optimisation de la ligne de fonctionnement du moteur, en interdisant l'utilisation du compresseur à un taux de pression optimal :
- de dégrader de ce fait les performances stabilisées, avec un impact sur la consommation spécifique.

Avec une telle configuration, une solution pour ne pas prélever de puissance mécanique sur l'arbre générateur afin de générer de l'électricité consiste à utiliser une machine électrique pour la fonction de démarrage avec un système de débrayage, et une autre machine électrique solidaire de l'arbre de turbine libre pour la fonction de génération comme illustré sur la figure 1, ce qui est pénalisant en termes de masse et de coût, en plus d'être rarement utilisé en pratique.

Une architecture connue permettant de démarrer une turbomachine à turbine libre sans adjonction de démarreur spécifique est divulguée dans le document FR 2 929 324. Cette solution technique permet de réduire la masse totale et le coût et d'augmenter la fiabilité du turbogénérateur par rapport à une turbomachine comprenant deux machines électriques comme sur la figure 1. La solution technique décrite dans ce document consiste en un système de commutation utilisant deux roues libres permettant de démarrer le générateur de gaz d'un turbomoteur à turbine libre, puis de générer l'énergie électrique non propulsive en prélevant l'énergie mécanique sur l'arbre de turbine libre. Les équipements restent entraînés via le générateur de gaz et la boîte d'accessoires.

Cette solution permet notamment d'améliorer les performances transitoires du générateur de gaz, en évitant les inconvénients d'un prélèvement d'énergie cinétique sur le générateur de gaz, et notamment le problème du déplacement de la ligne de fonctionnement du moteur dans le champ compresseur du fait de la variation, au cours du vol, de la puissance mécanique prélevée par la machine électrique.

Cette architecture avec deux roues libres est avantageuse dans le cadre d'une turbomachine d'hélicoptère afin de ne pas entraîner le rotor principal via la machine électrique pendant la phase de démarrage. En effet la turbine libre de la turbomachine étant mécaniquement raccordée au rotor principal, un couplage entre l'arbre de la turbine libre et le rotor principal qui ne pourrait pas être découplé pendant la phase de démarrage nécessiterait de sur-dimensionner au moins le système de stockage d'énergie afin que la machine électrique dispose de suffisamment d'énergie pour pouvoir entrainer en rotation toute la chaine cinématique (incluant le rotor principal).

Afin d'améliorer la performance de la turbomachine à turbine libre, il serait intéressant aussi de pouvoir entrainer l'ensemble des équipements de la turbomachine via la turbine libre. Mais la performance de la pompe à carburant étant associée à sa vitesse de rotation, l'évolution de vitesse de la turbine libre après la phase de démarrage ne permettrait pas, ou impacterait fortement, le design de l'ensemble système carburant pour garantir un bon démarrage de la turbomachine.

Il est connu des documents US2018/0252161, US3514945, et FR2921423 des turbomachines illustrant l'état de la technique.

### Exposé de l'invention

A cet effet, la présente invention propose une turbomachine à turbine libre entraînant une ou plusieurs machines électriques de puissance suffisante dotée d'un système de commutation simplifié permettant d'optimiser la masse, le coût et la fiabilité.

Dans un objet de l'invention, il est proposé une turbomachine comportant un générateur de gaz doté d'un premier arbre mécanique, au moins une machine électrique réversible, une turbine libre dotée d'un second arbre mécanique et entraînée en rotation par un flux de gaz généré par le générateur de gaz, une boîte d'accessoires, une transmission de puissance mécanique dans le cadre d'un hélicoptère et au moins un accessoire couplé à la boîte d'accessoires.

Selon une caractéristique technique de l'invention, la turbomachine comprend en outre un premier moyen de couplage mécanique configuré pour mécaniquement coupler ledit premier arbre mécanique à la boîte d'accessoires dans une première configuration et découpler mécaniquement ledit premier arbre mécanique de la boîte d'accessoires dans une seconde configuration, et un second moyen de couplage mécanique configuré pour coupler mécaniquement ledit second arbre mécanique à la boîte d'accessoires dans une première configuration et découpler mécaniquement ledit second arbre mécanique de la boîte d'accessoires dans une seconde configuration, la machine électrique étant dimensionnée pour entraîner le générateur de gaz et ledit au moins un accessoire lors du démarrage de la turbomachine.

La turbomachine selon l'invention comprenant une machine électrique et deux moyens de couplage mécanique permet à la fois de mutualiser la fonction de démarrage du générateur de gaz et de génération électrique forte puissance sur la machine électrique, et d'éviter que la turbine libre et le rotor dans le cas d'une transmission mécanique ne soient entrainés par la machine électrique pendant la phase de démarrage, ce qui permet de réduire l'inertie et le couple résistant au démarrage. En outre, cette configuration permet à la turbine libre d'entrainer les accessoires et le rotor une fois la turbomachine démarrée. En effet, la machine électrique permet d'initier à la fois la rotation des accessoires, et celle du générateur de gaz jusqu'à ce que le générateur de gaz puisse fonctionner en autonomie, puis une fois que la turbine libre dépasse une certaine puissance à partir de laquelle le second moyen de couplage mécanique couple mécaniquement le second arbre mécanique à la boîte d'accessoires, la machine électrique peut fonctionner en mode générateur en étant entraînée par la turbine libre via la boîte d'accessoires pour fournir ainsi de la puissance électrique à d'autres éléments.

En outre, l'architecture selon l'invention permet en cas de rupture de l'arbre de turbine libre en fonctionnement d'impacter directement l'entrainement des accessoires (dont la pompe à carburant) ayant pour effet direct d'éteindre instantanément le moteur et donc de limiter la survitesse de la turbine libre. Cette architecture a pour effet de protéger en survitesse la turbine libre.

Selon un premier aspect de la turbomachine, la turbomachine peut comprendre en outre une unité de commande de la machine électrique, l'unité de commande étant configurée pour placer la machine électrique en mode moteur lors du démarrage de la turbomachine, et placer la machine électrique en mode générateur lorsque le second moyen de couplage est placé dans sa première configuration.

En découplant le générateur de gaz de la boîte d'accessoires une fois que le générateur de gaz a atteint un régime permettant son fonctionnement en autonomie, l'énergie électrique à délivrer par la machine électrique (jusqu'au régime de puissance de la turbine libre) est réduite puisque la quantité d'énergie nécessaire ne correspond plus qu'à celle pour entrainer les accessoires.

La phase de transition entre le fonctionnement autonome du générateur de gaz et le couplage de la turbine libre à la boîte d'accessoires pour permettre le fonctionnement de la machine électrique en mode générateur, pendant laquelle la machine électrique continue de fonctionner en mode moteur mais seulement pour les accessoires, permet ainsi de conserver la vitesse de rotation des équipements, ou accessoires, suffisamment élevée pour garantir leur bon fonctionnement.

Selon un deuxième aspect de la turbomachine, le second moyen de couplage mécanique est placé dans sa seconde configuration depuis la phase de démarrage de la turbomachine et jusqu'à ce qu'un paramètre de fonctionnement du second arbre mécanique ou du second moyen de couplage mécanique ait dépassé un seuil de puissance à partir duquel la turbine libre se trouve dans une configuration de puissance lui permettant d'entraîner ledit au moins un accessoire sans assistance de la machine électrique.

La valeur du paramètre de fonctionnement correspondant au seuil à partir duquel la turbine libre est dans sa configuration de puissance est de préférence supérieure à la valeur que ledit paramètre de fonctionnement présente lorsque le premier arbre atteint le seuil de vitesse de sortie de phase de démarrage, En d'autres termes, le seuil à partir duquel la turbine libre peut entraîner les accessoires arrive après le moment ou le générateur de gaz est devenu autonome. La machine électrique est configurée pour fonctionner en mode générateur une fois que ledit paramètre du second arbre mécanique ou de la machine électrique a dépassé le seuil de puissance.

Selon un troisième aspect de la turbomachine, le premier moyen de couplage mécanique peut comprendre une première roue libre et le second moyen de couplage mécanique peut comprendre une seconde roue libre.

Selon un quatrième aspect de la turbomachine, le premier moyen de couplage mécanique et le second moyen de couplage mécanique peuvent être compris dans un carter de la boîte d'accessoires.

Les pignons de la boite d'accessoires permettent ainsi d'adapter les vitesses pour les équipements, tels qu'une pompe à carburant ou une pompe à huile, mécaniquement couplés au premier arbre mécanique, c'est-à-dire au générateur de gaz.

Selon un cinquième aspect de la turbomachine, la turbomachine peut comprendre en outre une boîte d'accessoires additionnelle raccordée au premier arbre mécanique pour coupler des accessoires additionnels directement au générateur de gaz en permanence.

Dans un autre aspect de l'invention, il est proposé un aéronef à voilure tournante comprenant au moins une turbomachine telle que définie ci-dessus, une boîte de transmission principale et un couplage mécanique entre la turbine libre et ladite boîte de transmission principale.

### Brève description des dessins

[Fig. 1] La figure 1, déjà décrite, est une vue schématique simplifiée d'une turbomachine à turbine libre selon l'état de la technique.
[Fig. 2] La figure 2, déjà décrite, est une représentation graphique de l'évolution, en fonction du temps et de la configuration possible du turbogénérateur, du régime de l'arbre du générateur de gaz et du régime de l'arbre de la turbine libre de la turbomachine de la figure 1.
[Fig. 3] La figure 3 est un schéma d'une turbomachine à turbine libre selon un mode de réalisation de l'invention.
[Fig. 4] La figure 4 présente un logigramme d'un procédé de commande du démarrage de la turbomachine de la figure 3 selon un mode de mise en œuvre.
[Fig. 5] La figure 5 est une représentation graphique de l'évolution, en fonction du temps et de la configuration possible du turbogénérateur, du régime de l'arbre du générateur de gaz et du régime de l'arbre de la turbine libre de la turbomachine de la figure 3.

### Description des modes de réalisation

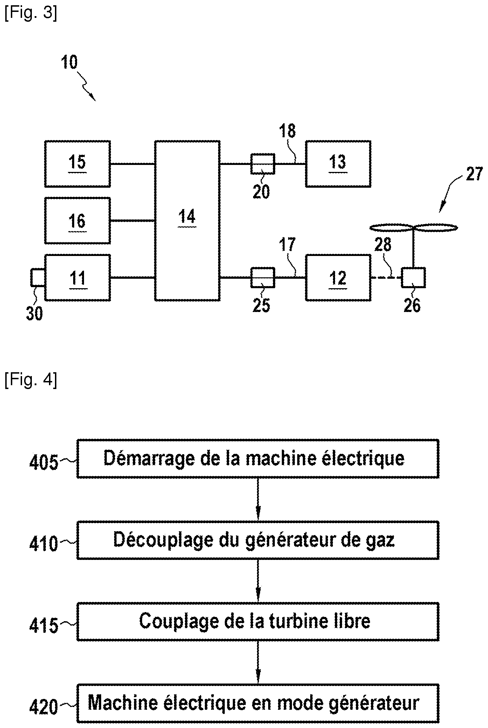

Sur la figure 3 est présentée schématiquement une turbomachine 10 à turbine libre selon un mode de réalisation de l'invention.

La turbomachine 10 comprend une machine électrique 11, une turbine libre 12, un générateur de gaz 13, une boîte d'accessoires 14, une pompe à carburant 15 et une pompe à huile 16.

Le générateur de gaz 13 comprend un arbre 18 raccordé et couplé mécaniquement à la boîte d'accessoires 14 via un premier moyen 20 de couplage mécanique. Le premier moyen 20 de couplage mécanique est configuré pour mécaniquement coupler l'arbre 18 du générateur de gaz 13 à la boîte d'accessoires 14 dans une première configuration, et le découpler mécaniquement de la boîte d'accessoires 14 dans une seconde configuration afin notamment de découpler l'arbre 18 du générateur de gaz 13 vis-à-vis de l'arbre 17 et la machine électrique 11. L'arbre 18 du générateur de gaz 13 est ainsi sélectivement couplé à la machine électrique 11 via la boîte d'accessoires 14.

La turbine libre 12 comprend un arbre 17 raccordé et couplé mécaniquement à la boîte d'accessoires 14 via un second moyen 25 de couplage mécanique. La boîte d'accessoires 14 est mécaniquement couplée à la machine électrique 11. Le second moyen 25 de couplage mécanique est configuré pour mécaniquement coupler l'arbre 17 de la turbine libre 12 à la boîte d'accessoires 14 dans une première configuration, et le découpler mécaniquement de la boîte d'accessoires 14 dans une seconde configuration afin notamment de découpler l'arbre 17 de la turbine libre 12 vis-à-vis de l'arbre 18 et de la machine électrique 11. L'arbre 17 de la turbine libre 12 est ainsi sélectivement couplé à la machine électrique 11 via la boîte d'accessoires 14.

La turbomachine 10 comprend en outre une boîte de transmission principale 26 et un rotor principal 27. La turbine libre 12 peut comprendre également un autre arbre mécanique 28, qui peut être un prolongement de l'arbre 17, et qui raccorde la turbine libre 12 à la boîte de transmission principale 26, la boîte de transmission principale 26 étant raccordée par ailleurs au rotor principal 27. La turbine libre est ainsi raccordée au rotor principal 27 via la boîte de transmission principale 26.

La boîte d'accessoires 14 est également mécaniquement couplée à la pompe à carburant 15, d'une part, et à la pompe à huile 16, d'autre part. Dans d'autres modes de réalisation d'autres accessoires peuvent être mécaniquement couplés à la boîte d'accessoires 14.

Le premier moyen 20 de couplage mécanique et le second moyen 25 de couplage mécanique comprennent chacun une roue libre.

La turbomachine 10 comprend en outre une unité de commande 30 de la machine électrique 11 configurée pour placer la machine électrique 11 dans un mode moteur lors d'une phase de démarrage de la turbomachine 10 et placer la machine électrique 11 dans un mode générateur lorsque le second moyen de couplage mécanique 25 est placé dans sa première configuration.

Le premier moyen de couplage 20 est configuré mécaniquement pour avoir la machine électrique 11 mécaniquement couplée au générateur de gaz 13 via l'arbre 18 lors du démarrage de la turbomachine 10.

En outre, le premier moyen de couplage 20 est configuré mécaniquement pour découpler le générateur de gaz 13 de la machine électrique 11 lorsque le générateur de gaz 13 atteint un seuil de vitesse de sortie de phase de démarrage.

Le second moyen de couplage 25 est configuré mécaniquement pour avoir la machine électrique 11 mécaniquement couplée à la turbine libre 12 via l'arbre 17 lorsque la turbine libre 12 se trouve dans une configuration de puissance lui permettant d'entraîner ledit au moins un accessoire sans assistance de la machine électrique 11.

Sur la figure 4 est présenté un logigramme d'un procédé de commande du démarrage de la turbomachine 10 selon un mode de mise en œuvre de l'invention.

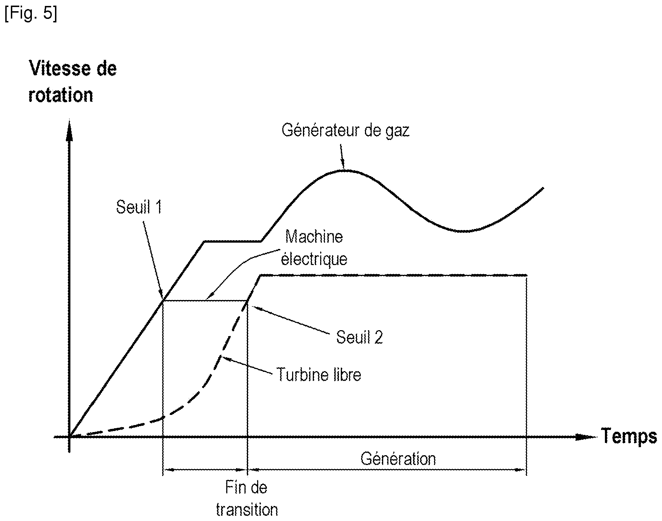

Sur la figure 5 est représentée graphiquement l'évolution, en fonction du temps et de la configuration possible de la turbomachine, du régime de l'arbre 18 du générateur de gaz 13 en trait plein et, en pointillés, du régime de l'arbre 17 de la turbine libre 12 de la turbomachine 10 de la figure 3 lors de son démarrage en utilisant le procédé de la figure 4.

Le procédé de démarrage de la turbomachine 10 comprend une première étape 405 dans laquelle la machine électrique 11 est placée en mode moteur et démarrée pour entamer une mise en rotation de l'arbre 18 du générateur de gaz 13 via la boîte d'accessoires 14, le premier moyen de couplage 20 étant placé dans sa première configuration permettant de coupler l'arbre 18 du générateur de gaz 13 à la boîte d'accessoires 14, et le second moyen de couplage 25 étant placé dans sa seconde configuration permettant de découpler mécaniquement l'arbre 17 de la turbine libre 12 de la boîte d'accessoires 14. En effet, lors de la mise en rotation de la boite d'accessoires 14 par la machine électrique 11, le premier moyen de couplage mécanique 20, qui peut être une roue libre, transmet automatiquement le couple nécessaire pour la mise en rotation du générateur de gaz 13.

Dans une deuxième étape 410, lorsque le régime de l'arbre 18 du générateur de gaz 13 dépasse un premier seuil, le générateur de gaz 13 peut fonctionner de manière autonome, c'est-à-dire sans assistance de la part de la machine électrique 11. A ce moment, le premier moyen de couplage 20 est placé dans sa seconde configuration pour découpler le générateur de gaz 13 de la boîte d'accessoires 14 et donc de la machine électrique 11.

La machine électrique 11 reste cependant dans un mode de fonctionnement moteur pour entraîner les accessoires 15 et 16 via la boîte d'accessoires 14.

Dans une troisième étape 415, lorsque le régime de l'arbre 17 de la turbine libre 12 dépasse un second seuil, la turbine libre 12 est dans un fonctionnement dit de puissance lui permettant d'entraîner les accessoires. A ce moment, le second moyen de couplage 25 est placé dans sa première configuration pour mécaniquement coupler la turbine libre 12 à la boîte d'accessoires 14 et ainsi entraîner les accessoires 15 et 16.

Dans une quatrième étape 420, la machine électrique 11 est, dans le même temps que la troisième étape 415, placée dans un mode de fonctionnement générateur.

Ainsi, la machine électrique 11 peut fonctionner en générateur électrique et produire de l'énergie électrique à partir de la rotation de l'arbre 17 de la turbine libre entraîné par le mouvement rotatif de la turbine libre 12 elle-même entraînée par le flux gazeux délivré par le générateur de gaz 13.

La phase de transition entre le fonctionnement autonome du générateur de gaz 13 et le fonctionnement de puissance de la turbine libre 12, pendant lequel la machine électrique 11 continue de fonctionner en mode moteur mais seulement pour assurer l'entrainement des accessoires, permet ainsi de conserver une vitesse de rotation des équipements ou accessoires suffisamment élevée pour garantir leur bon fonctionnement.

La turbomachine à turbine libre selon la présente invention permet ainsi d'optimiser la masse, le coût et la fiabilité du système de commutation et donc de la turbomachine.

## Revendications

1. Turbomachine (10) comportant un générateur de gaz (13) doté d'un premier arbre mécanique (18), une boîte d'accessoires (14), au moins une machine électrique réversible (11) couplée à la boîte d'accessoires (14), une turbine libre (12) munie d'un second arbre mécanique (17) et entraînée en rotation par un flux de gaz généré par le générateur de gaz (13), et au moins un accessoire (15, 16) couplé à la boîte d'accessoires (14),
**caractérisée en ce que** la turbomachine (10) comprend en outre un premier moyen (20) de couplage mécanique configuré pour coupler mécaniquement ledit premier arbre mécanique (18) à la boîte d'accessoires (14) dans une première configuration du premier moyen de couplage mécanique et découpler mécaniquement ledit premier arbre mécanique (18) de la boîte d'accessoires (14) dans une seconde configuration du premier moyen de couplage mécanique, et un second moyen (25) de couplage mécanique configuré pour coupler mécaniquement ledit second arbre mécanique (17) à la boîte d'accessoires (14) dans une première configuration du second moyen de couplage mécanique et découpler mécaniquement ledit second arbre mécanique (17) de la boîte d'accessoires (14) dans une seconde configuration du second moyen de couplage mécanique, la machine électrique (11) étant dimensionnée pour entraîner le générateur de gaz et ledit au moins un accessoire lors du démarrage de la turbomachine.

2. Turbomachine (10) selon la revendication 1, comprenant en outre une unité de commande (30) de ladite au moins une machine électrique (11), l'unité de commande (30) étant configurée pour placer la machine électrique (11) en mode moteur lors du démarrage de la turbomachine (10), et placer la machine électrique (11) en mode générateur lorsque le second moyen (25) de couplage mécanique est placé dans sa première configuration.

3. Turbomachine (10) selon la revendication 2, dans lequel le second moyen de (25) couplage mécanique est placé dans sa seconde configuration depuis la phase de démarrage de la turbomachine (10) et jusqu'à ce qu'un paramètre du second arbre mécanique (17) ou du second moyen (25) de couplage mécanique ait dépassé un seuil de puissance à partir duquel la turbine libre (12) se trouve dans une configuration de puissance lui permettant d'entraîner ledit au moins un accessoire sans assistance de la machine électrique (11).

4. Turbomachine (10) selon l'une des revendications 1 à 3, dans laquelle le premier moyen (20) de couplage mécanique comprend une première roue libre et le second moyen (25) de couplage mécanique comprend une seconde roue libre.

5. Turbomachine (10) selon l'une des revendications 1 à 4, dans laquelle le premier moyen (20) de couplage mécanique et le second moyen de couplage mécanique (25) sont compris dans un carter de la boîte d'accessoires (14).

6. Turbomachine selon l'une des revendications 1 à 5, comprenant en outre une boîte d'accessoires additionnelle raccordée au premier arbre mécanique (18) pour coupler des accessoires additionnels directement au générateur de gaz (13) en permanence.

7. Aéronef à voilure tournante comprenant au moins une turbomachine selon l'une des revendications 1 à 6, une boîte de transmission principale (26) et un couplage mécanique (28) entre la turbine libre (12) et ladite boîte de transmission principale (26).

## Patentansprüche

1. Turbomaschine (10), die einen Gasgenerator (13), der mit einer ersten mechanischen Welle (18) versehen ist, ein Hilfseinrichtungsgetriebe (14), zumindest eine reversible elektrische Maschine (11), die mit dem Hilfseinrichtungsgetriebe (14) gekoppelt ist, eine freie Turbine (12), die mit einer zweiten mechanischen Welle (17) versehen ist und zur Drehung durch einen von dem Gasgenerator (13) erzeugten Gasstrom angetrieben wird, und zumindest eine Hilfseinrichtung (15, 16) beinhaltet, die mit dem Hilfseinrichtungsgetriebe (14) gekoppelt ist,
**dadurch gekennzeichnet, dass** die Turbomaschine (10) ferner ein erstes Mittel (20) zur mechanischen Kopplung umfasst, das dazu ausgestaltet ist, in einer ersten Konfiguration des ersten Mittels zur mechanischen Kopplung die erste mechanische Welle (18) mit dem Hilfseinrichtungsgetriebe (14) mechanisch zu koppeln, und in einer zweiten Konfiguration des ersten Mittels zur mechanischen Kopplung die erste mechanische Welle (18) von dem Hilfseinrichtungsgetriebe (14) mechanisch zu entkoppeln, und ein zweites Mittel (25) zur mechanischen Kopplung, das dazu ausgestaltet ist, in einer ersten Konfiguration des zweiten Mittels zur mechanischen Kopplung die zweite mechanische Welle (17) mit dem Hilfseinrichtungsgetriebe (14) mechanisch zu koppeln, und in einer zweiten Konfiguration des zweiten Mittels zur mechanischen Kopplung die zweite mechanische Welle (17) von dem Hilfseinrichtungsgetriebe (14) mechanisch zu entkoppeln, wobei die elektrische Maschine (11) dazu dimensioniert ist, den Gasgenerator und die zumindest eine Hilfseinrichtung während des Starts der Turbomaschine anzutreiben.

2. Turbomaschine (10) nach Anspruch 1, ferner umfassend eine Steuereinheit (30) der zumindest einen elektrischen Maschine (11), wobei die Steuereinheit (30) dazu ausgestaltet ist, die elektrische Maschine (11) während des Starts der Turbomaschine (10) in den Motormodus zu versetzen, und die elektrische Maschine (11) in den Generatormodus zu versetzen, wenn das zweite Mittel (25) zur mechanischen Kopplung in seine erste Konfiguration versetzt ist.

3. Turbomaschine (10) nach Anspruch 2, wobei das zweite Mittel (25) zur mechanischen Kopplung ab der Startphase der Turbomaschine (10) und solange, bis ein Parameter der zweiten mechanischen Welle (17) oder des zweiten Mittels (25) zur mechanischen Kopplung eine Leistungsschwelle erreicht, ab welcher die freie Turbine (12) sich in einer Leistungskonfiguration befindet, die es ihr gestattet, die zumindest eine Hilfseinrichtung ohne Unterstützung der elektrischen Maschine (11) anzutreiben, in seine zweite Konfiguration versetzt ist.

4. Turbomaschine (10) nach einem der Ansprüche 1 bis 3, wobei das erste Mittel (20) zur mechanischen Kopplung einen ersten Freilauf umfasst und das zweite Mittel (25) zur mechanischen Kopplung einen zweiten Freilauf umfasst.

5. Turbomaschine (10) nach einem der Ansprüche 1 bis 4, wobei das erste Mittel (20) zur mechanischen Kopplung und das zweite Mittel zur mechanischen Kopplung (25) in einem Gehäuse des Hilfseinrichtungsgetriebes (14) umfasst sind.

6. Turbomaschine nach einem der Ansprüche 1 bis 5, ferner umfassend ein zusätzliches Hilfseinrichtungsgetriebe, das mit der ersten mechanischen Welle (18) verbunden ist, um dauerhaft zusätzliche Hilfseinrichtungen direkt mit dem Gasgenerator (13) zu koppeln.

7. Drehflügel-Luftfahrzeug, umfassend zumindest eine Turbomaschine nach einem der Ansprüche 1 bis 6, ein Hauptgetriebe (26) und eine mechanische Kopplung (28) zwischen der freien Turbine (12) und dem Hauptgetriebe (26).

## Claims

1. A turbomachine (10) including a gas generator (13) comprising a first mechanical shaft (18), an accessory gear box (14), at least one reversible electric machine (11) coupled to the accessory gear box (14), a free turbine (12) provided with a second mechanical shaft (17) and rotationally driven by a stream of gas generated by the gas generator (13), and at least one accessory (15, 16) coupled to the accessory gear box (14),
**characterized in that** the turbomachine (10) further comprises a first mechanical coupling means (20) configured to mechanically couple said first mechanical shaft (18) to the accessory gear box (14) in a first configuration of the first mechanical coupling means and to mechanically uncouple said first mechanical shaft (18) from the accessory gear box (14) in a second configuration of the first mechanical coupling means, and a second mechanical coupling means (25) configured to mechanically couple said second mechanical shaft (17) to the accessory gear box (14) in a first configuration of the second mechanical coupling means and to mechanically uncouple said second mechanical shaft (17) from the accessory gear box (14) in a second configuration of the second mechanical coupling means, the electric machine (11) being dimensioned to drive the gas generator and said at least one accessory during the start-up of the turbomachine.

2. The turbomachine (10) as claimed in claim 1, further comprising a control unit (30) of said at least one electric machine (11), the control unit (30) being configured to put the electric machine (11) in motor mode during the start-up of the turbomachine (10), and to put the electric machine (11) in generator mode when the second coupling means (25) is put in its first configuration.

3. The turbomachine (10) as claimed in claim 2, wherein the second mechanical coupling means (25) is put in its second configuration from the start-up phase of the turbomachine (10) until a parameter of the second mechanical shaft (17) or of the second mechanical coupling means (25) has exceeded a power threshold above which the free turbine (12) is in a power configuration allowing it to drive said at least one accessory without the assistance of the electric machine (11).

4. The turbomachine (10) as claimed in one of claims 1 to 3, wherein the first mechanical coupling means (20) comprises a first free wheel and the second mechanical coupling means (25) comprises a second free wheel.

5. The turbomachine (10) as claimed in one of claims 1 to 4, wherein the first mechanical coupling means (20) and the second mechanical coupling means (25) are contained in a casing of the accessory gear box (14).

6. The turbomachine (10) as claimed in one of claims 1 to 5, further comprising an additional accessory gear box connected to the first mechanical shaft (18) to constantly couple additional accessories directly to the gas generator (13).

7. An aircraft with rotary wings comprising at least one turbomachine as claimed in one of claims 1 to 6, a main gear box (26) and a mechanical coupling (28) between the free turbine (12) and said main gear box (26).
